**Europäisches Patentamt**

**European Patent Office**

**Office européen des brevets**

(19)

(11) Veröffentlichungsnummer: **0 259 406**
**B1**

(12) **EUROPÄISCHE PATENTSCHRIFT**

(45) Veröffentlichungstag der Patentschrift: **30.05.90**

(51) Int. Cl.⁵: **B 65 G 13/11**

(21) Anmeldenummer: **87901439.7**

(22) Anmeldetag: **14.02.87**

(86) Internationale Anmeldenummer:
**PCT/EP87/00079**

(87) Internationale Veröffentlichungsnummer:
**WO 87/05280 11.09.87 Gazette 87/20**

(54) **ROLLSTEIN UND AUS ROLLSTEINEN ZUSAMMENGESETZTE ROLLBAHN.**

(30) Priorität: **03.03.86 DE 3606889**
**08.08.86 DE 3626958**

(43) Veröffentlichungstag der Anmeldung:
**16.03.88 Patentblatt 88/11**

(45) Bekanntmachung des Hinweises auf die
Patenterteilung:
**30.05.90 Patentblatt 90/22**

(84) Benannte Vertragsstaaten:
**AT BE CH DE FR GB IT LI LU NL SE**

(56) Entgegenhaltungen:
**DE-A-2 238 296**
**US-A-2 949 992**
**US-A-3 559 802**

(73) Patentinhaber: **OTTO, Werner**
**Waldspitze 23**
**D-8503 Altdorf (DE)**

(73) Patentinhaber: **Couwenbergs, Paul**
**Scheibenbergstrasse 17**
**D-7500 Karlsruhe 21 (DE)**

(72) Erfinder: **Couwenbergs, Paul**
**Scheibenbergstrasse 17**
**D-7500 Karlsruhe (DE)**

(74) Vertreter: **Weisse, Jürgen, Dipl.-Phys. et al**
**Bökenbusch 41 Postfach 11 03 86**
**D-5620 Velbert 11-Langenberg (DE)**

EP 0 259 406 B1

**Beschreibung**

Die Erfindung betrifft einen Rollstein zur rollenden Abstützung von Gegenständen, enthaltend ein Unterbauteil mit einer Mehrzahl von Lagerelementen, eine Vielzahl von Rollkugeln, die jeweils an einem Lagerelement rollend gelagert sind, und ein Abdeckteil zur Halterung der Rollkugeln an der Mehrzahl von Lagerelementen und mit einer Mehrzahl von zu den Lagerelementen ausgerichteten Durchbrüchen, wobei die Rollkugeln so gelagert sind, daß sie um weniger als die Hälfte ihres Umfangs über die Oberfläche des Abdeckteils vorstehen (siehe z.B. US—A—2 949 992).

Die Erfindung betrifft auch eine Rollbahn zur rollenden Abstützung von Gegenständen, enthaltend Rollbahnelemente aus einem Unterbauteil mit einer Vielzahl von Lagerelementen, einer Vielzahl von an den Lagerelementen rollend gelagerten Rollkugeln und einem Abdeckteil, das eine Vielzahl von zu den Rollkugeln ausgerichteten Durchbrüchen enthält, wobei die Rollkugeln so gelagert sind, daß sie um weniger als die Hälfte ihres Umfangs über die Oberfläche des Abdeckteils vorstehen (seihe z.B. US—A—2 949 992).

Bei einer bekannten reibungsfreien, kugelgestützten Transportanordnung (US—A—2 949 992) ist ein Unterbauteil in Form einer Grundplatte vorgesehen, die auf einer Seite mit einer Vielzahl von Ausnehmungen versehen ist. Jede Ausnehmung nimmt teilweise eine Stahlkugel auf, die am Grunde der Ausnehmung auf einem Kugellager rollbeweglich abgestützt ist. An der Oberfläche der Grundplatte ist auf der Seite der Ausnehmungen eine Halteplatte befestigt, die die Rollkugeln in den Ausnehmungen hält und mit Durchbrüchen versehen ist, durch welche die Rollkugeln über die Halteplatte vorstehen.

Eine weitere bekannte Anordnung (DE—A—2 238 296) zur Bildung einer Rollfläche besteht aus einer Mehrzahl transportabler Einheiten, die durch ineinandergreifende Zapfen und Bohrungen miteinander verbunden sind. Jede Einheit enthält eine Vielzahl von Rollkugeln, die jeweils an einer Gruppe von Lagerelementen rollend gelagert sind. Die Gruppen von Lagerelementen sind entweder von Schrauben gebildet, die in eine Grundplatte fest eingeschraubt sind und mit Lagerflächen für die Rollkugeln versehen sind, oder von einem Gitter sich kreuzender Schienen, die starr mit der Grundplatte verbunden sind und seitlich mit Lagerflächen für die Rollkugeln versehen sind. Die Schrauben bzw. das Schienengitter tragen Deckplatten mit Durchbrüchen, durch welche die Rollkugeln über die Deckplatten hervorragen. Für den Gebrauch werden die Einheiten mit ihren Grundplatten auf einer Fläche ausgelegt, auf der die Rollfläche ausgebildet werden soll.

Die vorbekannten Anordnungen liegen dem Boden oder Untergrund auf, ohne darin verankert zu sein. Das Unterbauteil wird von einer großflächigen Grundplatte gebildet, die eine Vielzahl von darin versenkten oder fest damit verbundenen Lagerelementen für eine Vielzahl von Rollkugeln enthält. Das Abdeckteil bildet eine Vielzahl von Durchbrüchen, die zu den jeweiligen Rollkugeln ausgerichtet sind, und ist entweder an der Grundplatte oder an den Lagerelementen befestigt.

Die Aufgabe der vorliegenden Erfindung besteht darin, einen Rollstein der eingangs genannten Art zu schaffen, der modular so aufgebaut ist, daß der Rollstein fest in einem Unterbau verankert werden kann und seine Einzelteile auch nach Zusammenbau zu einer Rollbahn leicht austauschbar sind.

Erfindungsgemäß wird diese Aufgabe dadurch gelöst, daß ein in einem Untergrund verankerbarer Unterbauteil vorgesehen ist, daß ein Lagerteil und das Abdeckteil jeweils für sich an einem von dem Unterbauteil aufragenden Träger gehaltert sind, und daß das Lagerteil die Mehrzahl von Lagerelementen aufweist, die symmetrisch zu dem Träger angeordnet und an einer dem Abdeckteil zugewandten Oberseite des Lagerteils ausgebildet sind.

Bei einer solchen modularen Ausbildung des Rollsteins sind somit ein selbständiges Lagerteil und ein selbständiges Abdeckteil lösbar an dem fest verankerbaren Unterbauteil angeordnet, so daß das Lagerteil und das Abdeckteil auch nach dem Zusammenbau der Rollsteine zu einer Rollbahn an jedem individuellen Rollstein leicht auswechselbar sind. Das ist wichtig, weil gerade diese Teile bei Benutzung der Rollbahn beschädigt und dann ausgewechselt werden können, ohne daß dazu das Unterbauteil aus dem Unterbau gelöst werden muß.

Die erfindungsgemäße Ausbildung des Rollsteins ermöglicht ferner, daß seine Einzelteile aus unterschiedlichen, an ihren jeweiligen Anwendungszweck optimal angepaßten Materialien hergestellt werden. Insbesondere können solche Einzelteile aus geeignet gewählten Kunststoffen in großer Stückzahl kostengünstig nach üblichen Verfahren der Kunststoffverarbeitung, z.B. im Spritzgußverfahren hergestellt werden.

Vorteilhafte Weiterbildungen des erfindungsgemäßen Rollsteins sind in Unteransprüchen gekennzeichnet.

Hinsichtlich der Rollbahn wird die vorgenannte Aufgabe dadurch gelöst, daß die Rollbahn aus einer Vielzahl von Rollsteinen zusammengesetzt ist, daß jeder Rollstein ein Unterbauteil, das im Untergrund der Rollbahn verankert ist, ein Lagerteil und ein Abdeckteil enthält, daß das Lagerteil und das Abdeckteil jedes Rollsteins jeweils für sich an einem von dem Unterbauteil aufragenden Träger gehaltert sind, und daß das Lagerteils jedes Rollsteins eine Mehrzahl von Lagerelementen aufwest, die symmetrisch zu dem Träger angeordnet sind und an einer dem jeweiligen Abdeckteil zugewandten Oberseite des Lagerteils ausgebildet sind.

Ausführungsbeispiele der Erfindung sind in den Zeichnungen dargestellt und werden nachfolgend anhand der Zeichnungen im einzelnen Erläutert und beschrieben. Es zeigen

Figur 1 einen Schnitt durch ein Ausführungsbeispiel des erfindungsgemäßen Rollsteins;

Fig. 2a und 2b eine Draufsicht bzw. einen Schnitt eines Unterbauteils bei dem Rollstein nach Figur 1;

Figur 3 eine Draufsicht auf ein Lagerteil des Rollsteins nach Figur 1;

Fig. 4a und 4b einen Schnitt bzw. eine Draufsicht eines Abdeckteils des Rollsteins nach Figur 1;

Figur 5 eine schematische Darstellung eines ersten Ausführungsbeispiels der erfindungsgemäßen Rollbahn;

Figur 6 eine schematische Darstellung eines zweiten Ausführungsbeispiels der erfindungsgemäßen Rollbahn; und

Figur 7 eine schematische Darstellung eines dritten Ausführungsbeispiels der erfindungsgemäßen Rollbahn.

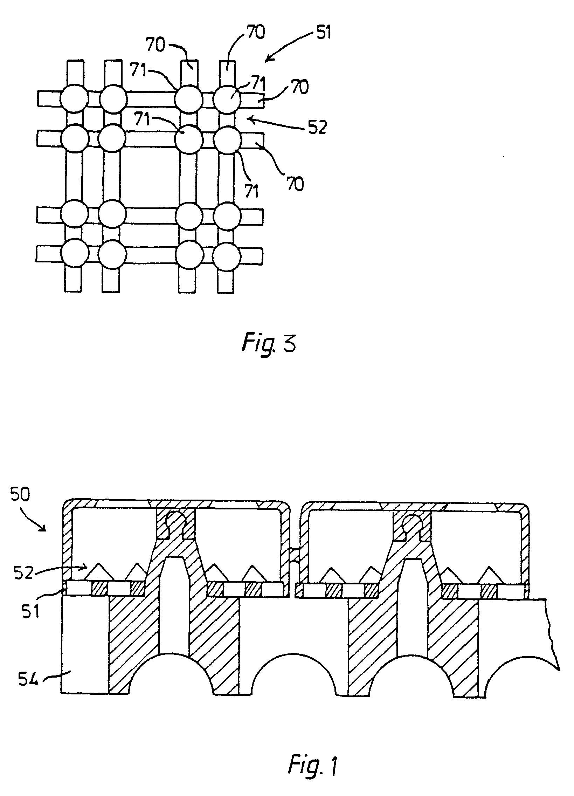

Ein vorteilhaft in Serienfertigung herstellbares Ausführungsbeispiel des Rollsteins 50 ist in Figur 1 im Schnitt dargestellt. Darin ist eine Einheit aus mehreren Rollsteinen 50 gezeigt, die auf Beton befestigt, aber auch in Beton eingegossen werden kann. Jeder Rollstein 50 ist aus drei Elementen zusammengesetzt, nämlich einem Lagerteil 51 mit mehreren Lagerelementen 52, einem Abdeckteil 53 mit mehreren Durchbrüchen für die nicht dargestellten Rollkugeln und einem Unterbauteil 54, der das Lagerteil 51 und das Abdeckteil 53 trägt.

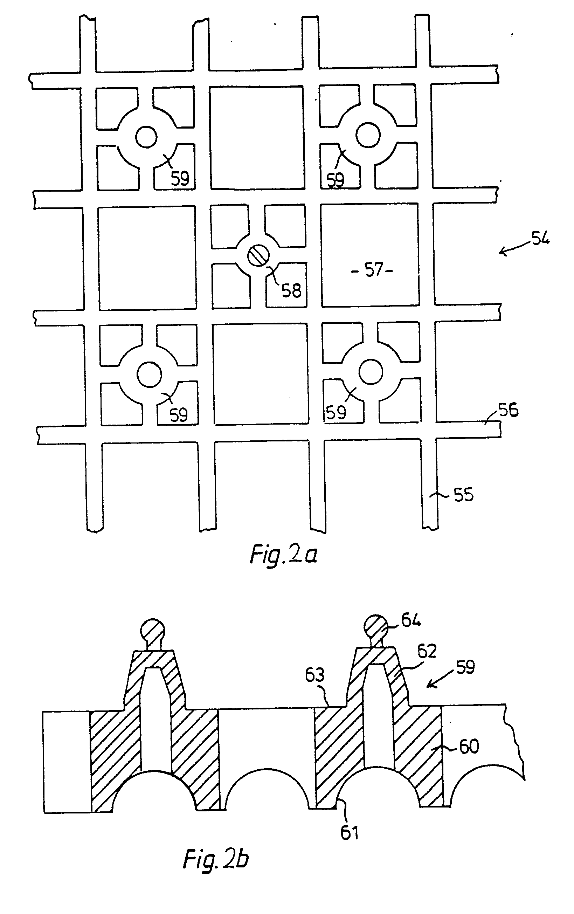

Im einzelnen ist eine Einheit aus mehreren Unterbauteilen 54 in Figur 2a und 2b in Draufsicht bzw. im Schnitt dargestellt. Die Einheit bildet eine gitterartige Grundstruktur, die z.B. im Spritzgußverfahren hergestellt werden kann. Zueinander senkrechte Stäbe 55, 56 des Gitters bilden Hohlräume 57, in denen Befestigungsmittel angeordnet sind, die mit den Stäben 55 und 56 fest verbunden sind. Ein erstes Befestigungsmittel 58 ist vorgesehen, um die Einheit an einer geeigneten Unterlage wie Beton zum Beispiel durch Schrauben zu befestigen. Die Einheit und ihre Unterbauteile 54 können aber auch in Beton eingegossen werden.

Ein zweites Befestigungsmittel in Gestalt eines abgestuften Trägers 59 ist jedem Unterbauteil 54 der Rollsteine 50 zugeordnet und enthält ein unter der Ebene des Gitters ausgebildetes Unterteil 60 mit einer Ausnehmung 61 an seiner Unterseite, die vorgesehen werden kann, wenn beispielsweise Heizungsrohre oder dergleichen unter dem Rollstein 50 verlegt werden sollen. Ein Oberteil 62 des Trägers 59 ist über der Ebene des Gitters angeordnet und durch eine Schulter 63 vom Unterteil 60 abgesetzt. An seinem freien End ist das Oberteil 62 mit einem Rastelement 64 versehen. Die ersten und zweiten Befestigungsmittel 58 und 59 sind in vorgegebenen Abständen in der Einheit angeordnet. In dem dargestellten Ausführungsbeispiel ist das erste Befestigungsmittel 58 zentrisch zwischen jeweils vier Trägern 59 vorgesehen, die in jedem zweiten Hohlraum 57 des Gitters angeordnet sind.

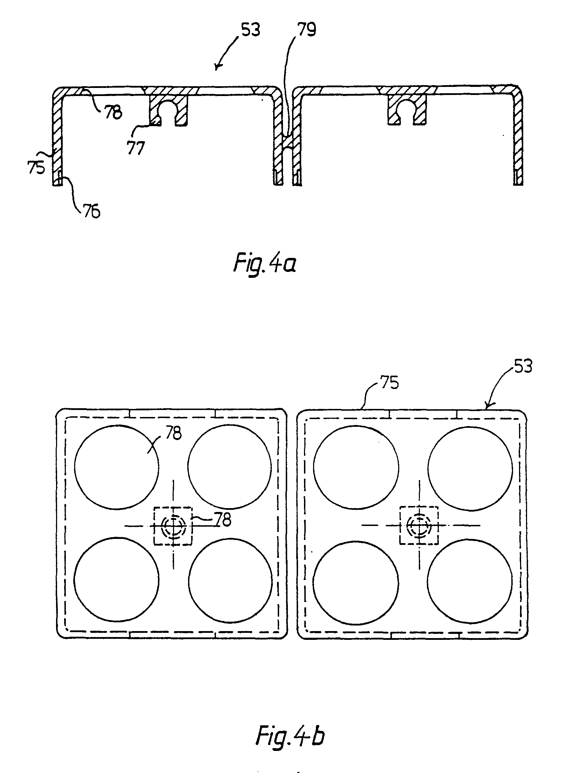

Das Lagerteil 51 ist in Draufsicht in Figur 3 dargestellt. Es besteht aus einer Rechteckanordnung von Stäben 70, die zu dem Träger 79 zentriert oder symmetrisch angeordnet sind und Doppelstäbe bilden. Deren innere Stäbe sind in einem solchen Abstand zueinander angeordnet, daß sie unter Klemmung an dem Oberteil 62 einer von der Schulter 63 jeweils eines Trägers 59 gebildeten Auflagefläche des Unterbauteils 54 aufliegen. Die Lagerelemente 52 sind an den Kreuzungspunkten der Doppelstäbe 70 ausgebildet.

In dem dargestellten Ausführungsbeispiel ist jeweils ein Lagerteil 51 für jeden Träger 59 vorgesehen und jedes Lagerteil 51 trägt an jeder Ecke ein Lagerelement 52 zur Lagerung jeweils einer Rollkugel. Es können aber auch Lagerteile 51 vorgesehen werden, die sich über mehrere Träger 59 erstrecken. In dem dargestellten Ausführungsbeispiel bilden die Lagerelemente 52 vier Lagerkörper 71 in Form von Kegeln, so daß jede Rollkugel an den Mantelflächen der vier Kegel abgestützt ist. Statt der Kegelform kann aber auch jede andere, zur rollenden Abstützung der Rollkugeln geeignete Form oder Verteilung von einzelnen Lagerelementen, zum Beispiel kugelförmigen Lagerelementen vorgesehen sein.

Eine Einheit aus mehreren Abdeckteilen 53 ist in Figuren 4a und 4b im Schnitt bzw. in Draufsicht dargestellt und besteht aus einzelnen Abdeckteilen 53, die jeweils einem Träger 59 bzw. Unterbauteil 54 eines Rollsteins 50 zugeordnet sind. Jedes Abdeckteil 53 ist aus einem harten Polyamid mit einer glatten bzw. gleitfähigen Oberfläche gefertigt und hat eine an einer Seite offene, schachtelartige Grundstruktur.

Die Seitenwände 75 jedes Abdeckteils 53 sind an der offenen Seite des Abdeckteils 53 an ihrer Innenseite mit Ausnehmungen 76 zur Aufnahme der freien Enden der Doppelstäbe 70 des zugehörigen Lagerteils 51 versehen und auf diese Weise mit dem Lagerteil 51 verbunden. Jedes Abdeckteil 53 weist ferner an seiner geschlossenen Seite eine dem zugehörigen Träger 59 zugekehrte Raste 77 auf, welche das Rastelement 64 am Oberteil 62 des Trägers 59 aufnimmt und dadurch eine feste, aber lösbare Verbindung zwischen dem Unterbauteil 54, dem Lagerteil 51 und dem Abdeckteil 53 sicherstellt. Die gleiche Art von Verbindung kann auch dadurch hergestellt werden, daß die Raste am Oberteil 62 des Trägers 59 und das Rastelement an dem zugehörigen Abdeckteil 53 angeordnet wird.

Die mit der Raste 77 oder gegebenenfalls dem Rastelement 64 versehene Seite des Abdeckteils 53 ist weiterhin mit Durchbrüchen 78 versehen, die zu den Lagerelementen 52 des Lagerteils 51 so ausgerichtet sind, daß die daran rollend abgestützten Rollkugeln durch die Durchbrüche 78 nach außen vorstehen und dadurch die rollbewegliche Abstützung für auf dem Rollstein 50 abgestützte Gegenstände ergeben. Die Seiten-Seitenwände der Durchbrüche 78 sind in Anpassung an die Rollkugeln abgeschrägt oder gegebenenfalls auch kugelsegmentartig ausgebildet.

Die Abdeckteile 53, die benachbarten Trägern 59 bzw. Rollsteinen 50 zugeordnet sind, sind durch flexible Stege 79 miteinander verbunden; diese Stege 79 bewirken einerseits eine bewegliche Verbindung zwischen den benachbarten Abdeckteilen 53 und bilden andererseits Sollbruchstellen, an denen die Abdeckteile 53 im Bedarfsfalle leicht voneinander getrennt werden können.

In den vorstehend beschriebenen Ausführungsbeispielen können die Rollkugeln mit einer schmutzabweisenden Oberflächenstruktur in Form von Oberflächenvertiefungen versehen sein. Diese Oberflächenvertiefungen haben eine Tiefe im Bereich von 0,5 bis 1,5 mm und sind praktisch über die gesamte Oberfläche der Rollkugel verteilt. Sie beeinträchtigen die Rollbewegung der Rollkugeln nicht oder nur unwesentlich, bewirken aber, daß Staub- und Schmutzpartikel, die in die Lagerung eingedrungen sind, durch die Rollbewegung der Rollkugeln aus der Lagerung wieder entfernt werden.

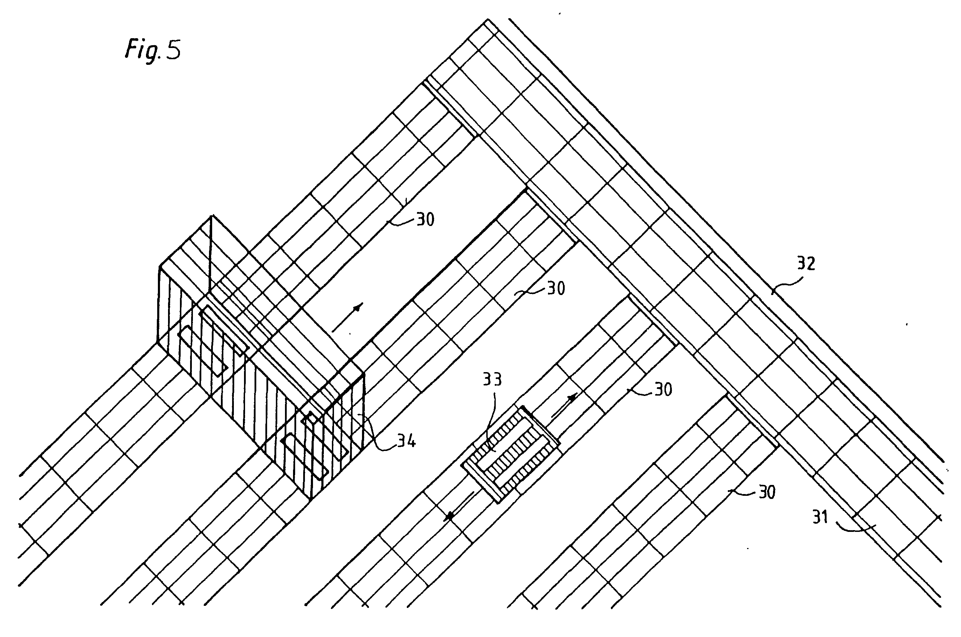

Ein erstes Ausführungsbeispiel einer Rollbahn 30 ist schematisch in Figur 5 dargestellt. Die Rollbahnen 30 werden dadurch gebildet, daß die einzelnen Rollsteine 50 von der Art wie sie vorstehend in Verbindung mit Figuren 1 bis 4 beschrieben worden sind, umfangsseitig mit Eingriffselementen nach Art von Rastelementen versehen sind und so durch Einrasten in eine gegenseitige Eingriffsverbindung gebracht und dadurch zu Rollbahnen 30 der jeweils gewünschten Länge zusammengesetzt werden können. Figur 5 zeigt insgesamt vier parallel verlaufende Rollbahnen 30, die an eine quer und ebenfalls geradlinig verlaufende Rollbahn 31 angeschlossen sind. Die Rollbahn 31 verläuft entlang einer Kaianlage 32, so daß die gesamte Anordnung aus den Rollbahnen 30 und 31 zur Beladung von Schiffen Verwendung finden kann, aber natürlich auch im Zusammenhang mit vielen anderen möglichen Beladungs- und Entladungsvorgängen eingesetzt werden kann. Wie dargestellt, lassen sich auf jeder Rollbahn 30 oder 31 Paletten 33, gegebenenfalls auf einem Trager, entlang der Rollbahn verschieben. Auf zwei benachbarten Rollbahnen 30, die zweckmäßig im Abstand voneinander angeordnet sind, lassen sich auch Container 34 nahezu mühelos an die Verladestelle heranbringen.

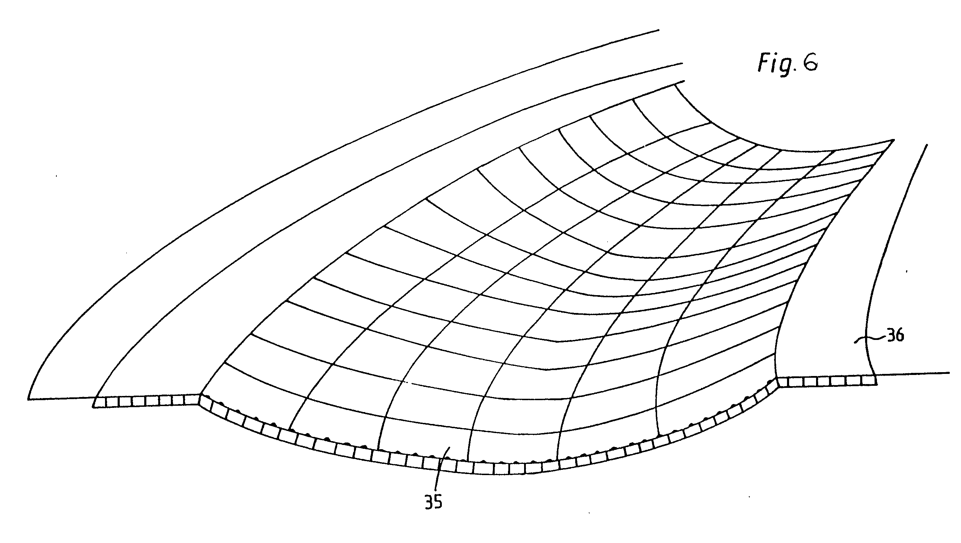

Bei geeigneter Formgebung der Rollsteine lassen sich auch nicht im einzelnen dargestellte Rollbahnen mit Kurvenstrecken zusammensetzen. In Figur 6 ist als zweites Ausführungsbeispiel eine in sich gekrümmte Rollbahn 35 dargestellt, bei der Rollsteine 50 nach Figuren 1 bis 4 in der vorstehend in Zusammenhang mit Figur 5 erläuterten Weise zusammengesetzt werden. Zweckmäßigerweise ist dabei ein geeigneter, hier nicht dargestellter Träger für die nicht selbsttragende Rollbahn 35 vorgesehen. Solche in sich gekrümmten Rollbahnen 35 sind beispielsweise für den Sammeltransport kleinerer Gegenstände oder Güter entlang einer Gefällstrecke geeignet.

Eine Rollbahn nach Art der Rollbahn 35 kann darüberhinaus auch als Roll- oder Rutschbahn für eine Vielzahl spielerischer und sportlicher Zwecke genutzt werden. In diesem Zusammenhang und besonders auf längeren Gefällstrecken ist es dabei zweckmäßig, neben der Rollbahn 35, gegebenenfalls auf beiden Seiten, eine Bremsstrecke 36 vorzusehen, die mit einem geeigneten Bremsbelag zum Beispiel aus Gummi versehen ist.

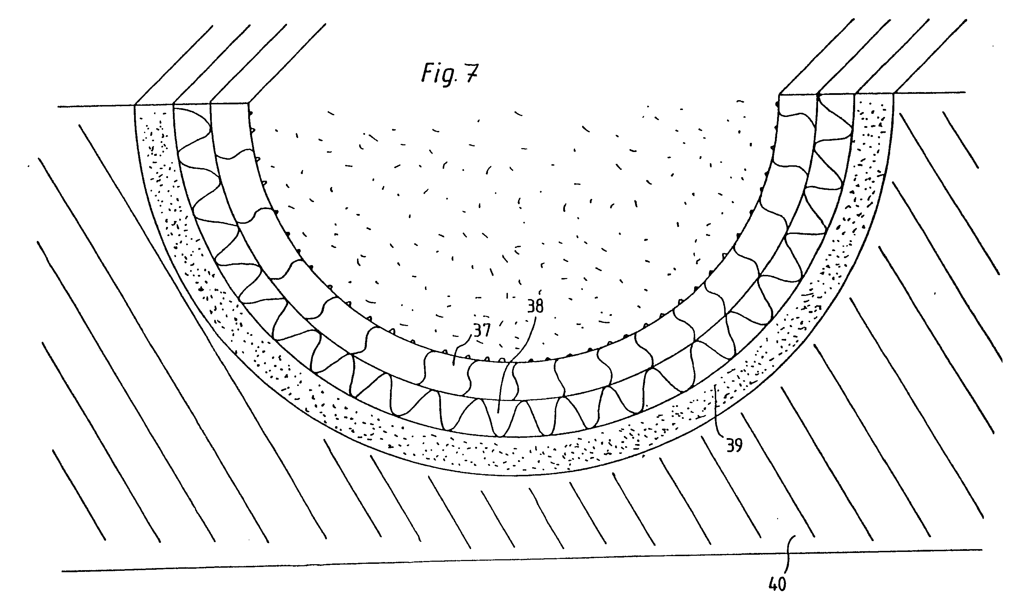

In dem in Figur 7 dargestellten dritten Ausführungsbeispiel ist eine Rollbahn 37 mit einem halbkreisförmigen Querschnitt gebildet. In der gleichen Weise kann gegebenenfalls auch eine in sich geschlossene, d.h. tunnelartige Rollbahn aufgebaut werden. Auch diese Ausbildung läßt sich wegen der geringen Reibung mit Vorteil zum Transport insbesondere kleinerer Güter und Gegenstände zum Beispiel in Anlagen nach Art eines Rohrförderers einsetzen, aber ebenso für spielerische oder sportliche Zwecke, zum Beispiel in Zusammenhang mit einer Bob-Bahn.

Im einzelnen sind die Rollsteine zur Bildung der Rollbahn 37 auf eine Unterfütterung 38 aufgelegt, die zum Abfangen von Stößen elastisch ausgebildet sein kann. Die Unterfütterung 38 wiederum liegt dem eigentlichen Träger 39 auf, der in einem geeigneten Fundament oder in einer geeigneten Tragkonstruktion 40 gehalten ist. Solche Verlegungen der Rollsteine sind grundsätzlich konventioneller Art und werden daher hier nicht im einzelnen beschrieben.

**Patentansprüche**

1. Rollstein zur rollenden Abstützung von Gegenständen, enthaltend ein Unterbauteil (54) mit einer Mehrzahl von Lagerelementen (52), eine Vielzahl von Rollkugeln, die jeweils an einem Lagerelement (52) rollend gelagert sind, und ein Abdeckteil (53) zur Halterung der Rollkugeln an der Mehrzahl von Lagerelementen (52) und mit einer Mehrzahl von zu den Lagerelementen ausgerichteten Durchbrüchen (78), wobei die Rollkugeln so gelagert sind, daß sie um weniger als die Hälftes ihres Umfangs über die Oberfläche des Abdeckteils (53) vorstehen dadurch gekennzeichnet, daß ein in einem Untergrund verankerbarer Unterbauteil (54) vorgesehen ist, daß ein Lagerteil (51) und das Abdeckteil (53) jeweils für sich an einem von dem Unterbauteil (54) aufragenden Träger (59) gehalten sind, und daß das Lagerteil (51) die Mehrzahl von Lagerelementen (52) aufweist, die symmetrisch zu dem Träger (59) angeordnet und an einer dem Abdeckteil (53) zugewandten Oberseite des Lagerteils (51) ausgebildet sind.

2. Rollstein nach Anspruch 1, dadurch gekennzeichnet, daß der Träger (59) und das Abdeckteil (53) durch ineinander greifende Rastelemente (64, 77) miteinander verbunden sind.

3. Rollstein nach Anspruch 1, dadurch gekennzeichnet, daß jedes Lagerteil (51) eine Anordnung aus einer Mehrzahl von zu dem Träger (59) zentrierten Stäben (70) aufweist und daß die Lagerelemente (52) an den Kreuzungspunkten der Stäbe (70) ausgebildet sind.

4. Rollstein nach Anspruch 3, dadurch gekennzeichnet, daß die Anordnung rechteckig ist und die Stäbe (70) als Doppelstäbe ausgebildet sind.

5. Rollstein nach Anspruch 4, dadurch gekennzeichnet, daß jedes Lagerelement (52) aus vier kegelförmigen Lagerkörpern (71) gebildet ist, die an den Kreuzungspunkten der Stäbe (70) aufragen.

6. Rollstein nach einem der Ansprüche 1 bis 5, dadurch gekennzeichnet, daß das Unterbauteil (54) an der dem Abdeckteil (53) abgewandten Seite mit Ausnehmungen (61) versehen ist.

7. Rollstein nach einem der Ansprüche 1 bis 6, dadurch gekennzeichnet, daß das Abdeckteil (53) die Form einer zu dem Unterbauteil (54) hin offenen Schachtel hat, die an der dem Lagerteil (51) abgekehrten Seite mit den Durchbrüchen (78) versehen ist.

8. Rollstein nach einem der Ansprüche 1 bis 8, dadurch gekennzeichnet, daß die Rollkugeln mit einer Vielzahl von über ihre Oberfläche verteilten Oberflächenvertiefungen mit einer Tiefe im Bereich von 0,5 bis 1,5 mm versehen sind.

9. Rollstein nach einem der Ansprüche 1 bis 8, dadurch gekennzeichnet, daß der Unterbauteil (54), das Lagerteil (51) und das Abdeckteil (53) aus Kunststoff gefertigt sind, daß aus Kunststoff gefertigte Einheiten jeweils eine Mehrzahl von Unterbauteilen (54), eine Mehrzahl von Lagerteilen (51) und eine Mehrzahl von Abdeckteilen (53) enthalten, wobei die Abdeckteile (53) durch flexible Stege (79) miteinander verbunden sind, und daß im zusammengebauten Zustand jeweils ein Lagerteil (51) und ein Abdeckteil (53) einem Unterbauteil (54) zugeordnet ist.

10. Rollbahn zur rollenden Abstützung von Gegenständen, enthaltend Rollbahnelemente aus einem Unterbauteil (54) mit einer Vielzahl von Lagerelementen (52), einer Vielzahl von an den Lagerelementen rollend gelagerten Rollkugeln und einem Abdeckteil (53), das eine Vielzahl von zu den Rollkugeln ausgerichteten Durchbrüchen (78) enthält, wobei die Rollkugeln so gelagert sind, daß sie um weniger als die Hälfte ihres Umfangs über die Oberfläche, des Abdeckteils (53) vorstehen dadurch gekennzeichnet, daß die Rollbahn (30, 31, 35, 37) aus einer Vielzahl von Rollsteinen (50) zusammengesetzt ist, daß jeder Rollstein (50) ein Unterbauteil (54), das im Untergrund der Rollbahn verankert ist, ein Lagerteil (51) und ein Abdeckteil (53) enthält, daß das Lagerteil (51) und das Abdeckteil (53) jedes Rollsteins (50) jeweils für sich an einem von dem Unterbauteil (54) aufragenden Träger (59) gehaltert sind, und daß das Lagerteil (51) jedes Rollsteins (50) eine Mehrzahl von Lagerelementen (52) aufweist, die symmetrisch zu dem Träger (59) angeordnet sind und an einer dem jeweiligen Abdeckteil (53) zugewandten Oberseite des Lagerteils (51) ausgebildet sind.

11. Rollbahn nach Anspruch 10, dadurch gekennzeichnet, daß die Rollsteine zu einer in sich gekrümmten Rollbahn (35, 37) zusammengesetzt sind.

12. Rollbahn nach Anspruch 11, dadurch gekennzeichnet, daß die gekrümmte Rollbahn (37) einen wenigstens teilweise kreisförmigen Querschnitt besitzt.

13. Rollbahn nach einem der Ansprüche 10 bis 12, dadurch gekennzeichnet, daß an wenigstens einer Seite der Rollbahn (35) eine mit einem Bremsbelag versehene Bremsstrecke (36) vorgesehen ist.

## Revendications

1. Bloc de roulement pour le support roulant d'objets, comprenant un composant inférieur (54) ayant une pluralité d'éléments de palier (52), une multitude de boules de roulement respectivement montées de manière roulante sur un élément de palier (52), et un élément de couverture 53) déstiné à fixer les boules de roulement sur la pluralité d'éléments de palier (52) et ayant une pluralité de percements (78) alignés vers les éléments de palier, les boules de roulement étant montées de sorte qu'elles saillent de moins de la moitié de leur circonférence au-delà de la surface de l'élément de couverture (53), caractérisé par le fait qu'un composant inférieur (54) est prévu, qui peut être ancré dans une base qu'une pièce de palier (51) et l'élément de couverture (53) sont fixés individuellement sur un suppoort (59) s'étendant du composant inférieur vers le haut, et que la pièce de palier (51) présente la pluralité d'éléments de palier (52) disposés symétriquement au support (59) et formés sur un côté supérieur de la pièce de palier (51) en face de l'élément de couverture (53).

2. Bloc de roulement selon la revendication 1, caractérisé par le fait que le support (59) et l'élément de couverture (53) sont reliés par des éléments de crantage (64, 77) emmanchant.

3. Bloc de roulement selon la revendication 1, caractérisé par le fait que chaque pièce de palier (51) présente une disposition de tiges (70) centrées vers le support (59), et que les éléments de palier (52) sont formés aux points d'intersection des tiges (70).

4. Bloc de roulement selon la revendication 3, caractérisé par le fait que la disposition est rectangulaire et que les tiges (70) sont formées comme double tiges.

5. Bloc de roulement selon la revendication 4, caractérisé par le fait que chaque élément de palier (52) est formé de quatre corps de palier (71) coniques saillant aux points d'intersection des tiges (70) vers le haut.

6. Bloc de roulement selon l'une des revendication 1 à 5, caractérisé par le fait que le composant inférieur (54) est muni de creux (61) sur le côté opposé à lélément de couverture (53).

7. Bloc de roulement selon l'une des revendication 1 à 6, caractérisé par le fait que l'élément de couverture (53) a la forme d'une boîte ouverte vers le composant inférieur (54) et munie de percements sur le côté opposé au composant inférieur (54).

8. Bloc de roulement selon l'une des revendications 1 à 8, caractérisé par le fait que les boules de roulement sont munies d'une multitude d'évidements de surface d'une profondeur entre 0,5 à 1,5 mm repartis sur leur surface.

9. Bloc de roulement selon l'une des revendications 1 à 8, caractérisé par le fait que le composant inférieur (54), la pièce de palier (51) et l'élément de couverture (53) sont fabriqués de matière plastique, que des unités fabriquées en matière plastique comprennent respectivement une pluralité de composants inférieurs (54), une pluralité de pièces de palier (51) et une pluralité d'éléments de couverture (53), les éléments de couverture (53) étant reliés par des entretoises flexibles (79), et qu'en état assemblé une pièce de palier (51) et un élément de couverture (53) à la fois étant associé à un composant inférieur (54).

10. Surface de roulement pour le support roulant d'objets, comprenant des éléments de surface de roulement d'un composant inférieur (54) ayant une multitude d'éléments de palier (52), une multitude de boules de roulement montées de manière roulante sur les éléments de palier, et un élément de couverture (53) comprenant une multitude de percements (7B) alignés vers les boules de roulement, les boules de roulement étant montées de sorte qu'elles saillent de moins de la moitié de leur circonférence au-delà de la surface de l'élément de couverture, caractérisée par le fait que la surface de roulement (30, 31, 35, 37) est composée d'une multitude de blocs de roulements (50), que chaque bloc de roulement (50) comprend un composant inférieur (54) ancré dans la base de la surface de roulement, une pièce de palier (51) et un élément de couverture (53), que la pièce de palier (51) et l'élément de couverture (53) de chaque bloc de roulement (50) sont supportés individuellement sur un support (59) saillant du composant inférieur (54) vers le haut, et que la pièce de palier (51) de chaque bloc de roulement (50) a une pluralité d'éléments de palier (52) disposés symmetriquement au support (59) et formés sur un côté de surface de la pièce de palier (51) en face de l'élément de couverture (53) respectif.

11. Surface de roulement selon la revendication 10, caractérisée par le fait que les blocs de roulements sont assemblés de sorte à former une surface de roulement courbée en soi (35, 37).

12. Surface de roulement selon la revendication 11, caractérisée par le fait que la surface de roulement courbée (37) a une coupe transversale au moins partiellement circulaire.

13. Surface de roulement selon l'une des revendications 10 à 12 caractérisée par le fait qu'une, distance d'arrêt (36) munie d'une garniture de frein est prévue sur au moins un côté de la surface de roulement (35).

**Claims**

1. Roll block for the rolling support of objects and containing a base member (54) having a plurality of bearing elements (52), a multitude of rolling balls each of which is rollingly supported at a bearing element (52), and a cover member (53) for holding the rolling balls at the plurality of bearing elements (52) and including a plurality of gaps (78) aligned to the bearing elements (52), the rolling balls being supported such that less than half of their circumference protrudes above the surface of the cover member (53), characterized in that there is provided a base member (54) which can be anchored in a foundation, that a support member (51) and the cover member (53) are each individually held at a carrier (59) upwardly protruding from the base member (54), and that the support member (51) comprises the plurality of bearing elements (52) which are symmetrically arranged with respect to the carrier (59) and which are formed at the support member (51) on a top side facing the cover member (53).

2. Roll block according to claim 1, characterized in that the carrier (59) and the cover member (53) are interconnected by means of interengaging locking elements (64, 77).

3. Roll block according to claim 1, characterized in that each support member (51) comprises an arrangement of a multitude of rods (70) which are centered relative to the carrier (59) and that the bearing elements (52) are formed at the intercrossing points of the rods (70).

4. Roll block according to claim 3, characterized in that the arrangement is rectangular and the rods (70) are designed as dual rods.

5. Roll block according to claim 4, characterized in that each bearing element (52) is formed by four conically shaped bearing bodies (71) which upwardly protrude at the intercrossing points of the rods (70).

6. Roll block according to any one of claims 1 to 5, characterized in that the base member (54) is provided with recesses (61) on the side remote from the cover member (53).

7. Roll block according to any one of claims 1 to 6, characterized in that the cover member (53) has the shape of a box which is open towards the base member (54) and which is provided with the gaps (78) on the side remote from the base member (54).

8. Roll block according to any one of claims 1 to 8, characterized in that the bearing balls are provided with a multitude of surface depressions which are distributed over their surface and have a depth in the range of 0.5 to 1.5 mm.

9. Roll block according to any one of claims 1 to 8, characterized in that the base member (54), the support member (51) and the cover member (53) are manufactured from plastics, that plastics-manufactured units each contain a multitude of base members (54), a multitude of support members (51) and a multitude of cover members (53), the cover members (53) being interconnected by flexible rods (79), and that in the assembled state one support member (51) and one cover member (53) are each associated with one base member (54).

10. Roll way for the rolling support of objects and containing roll way elements comprising a base member (54) having a plurality of bearing elements (52), a multitude of rolling balls rollingly supported at the bearing elements, and a cover member (53) containing a multitude of gaps (78) which are aligned to the rolling balls, the rolling balls being supported such that less than half of their circumference protrudes above the surface of the cover member (53), characterized in that the roll way (30, 31, 35, 37) is assembled from a multitude of roll blocks (50), that each roll block (50) contains a base member (54) which is anchored in the roll way foundation, a support member (51) and a cover member (53), that the support member (51) and the cover member (53) of each roll block (50) are each individually held at a carrier (59) which protrudes upwardly from the base member (54), and that the support member (51) of each roll block (50) comprises a plurality of bearing elements (52) which are symmetrically arranged with respect to the carrier (59) and which are formed at the support member (52) on a top side facing the associated cover member (53).

11. Roll way according to claim 10, characterized in that the roll blocks are assembled to form a roll way which is curved as such.

12. Roll way according to claim 11, characterized in that the curved roll way possesses an at least partially circularly shaped cross-section.

13. Roll way according to any one of claims 10 to 12, characterized in that a braking path (36) provided with a brake lining, is provided on at least one side of the roll way (35).

Fig. 3

Fig. 1

*Fig.2a*

*Fig.2b*

Fig.4a

Fig.4b

*Fig.* 5

EP 0 259 406 B1

Fig. 6

Fig. 7

EP 0 259 406 B1